# EUROPEAN PATENT SPECIFICATION

(11) **EP 3 795 386 B1**
(45) Date of publication and mention of the grant of the patent: **01.11.2023**
(21) Application number: 19847668.1
(22) Date of filing: 17.07.2019
(51) Int. Cl.: B60C 11/03, B60C 11/11

(54) **MOTORCYCLE TIRE**
MOTORRADREIFEN
PNEU DE MOTOCYCLETTE

(30) Priority: 09.08.2018 JP 2018150852
(43) Date of publication of application: 24.03.2021
(73) Proprietor: Bridgestone Corporation, Chuo-Ku Tokyo 104-8340 (JP)
(72) Inventor: OKI, Hiroyuki, Tokyo 104-8340 (JP); HAGIWARA, Kazumasa, Tokyo 104-8340 (JP)
(74) Representative: Marks & Clerk LLP
(86) International application number: PCT/JP2019/028128
(87) International publication number: WO 2020/031640

(56) References cited:
- JP-A- 2005 199 927
- JP-A- 2006 273 052
- JP-A- 2007 112 396
- JP-A- 2009 067 245
- JP-A- 2010 023 585
- JP-A- 2012 011 953
- JP-A- 2013 082 350
- JP-A- 2013 249 014
- JP-A- 2015 147 546
- JP-B2- 4 272 244

## Description

### TECHNICAL FIELD

The invention relates to a motorcycle tire, specifically, a motorcycle tire configured to suppress generation of uneven wear in the use of the tire on paved road surfaces without deteriorating steering stability on rough terrain surfaces and the paved road surfaces.

### BACKGROUND

A generally employed motorcycle tire mainly used for running on a rough terrain has a plurality of land portions on the tread, divided by a plurality of grooves to secure running performance such as steering stability on the rough terrain.

For example, a motorcycle tire as disclosed in Patent Literature 1 improves durability of the land portion by making inclination of the side wall of the land portion at a step-in side steeper than that of the side wall of the land portion at a kick-out side for maintaining good running performance achieved by the land portions under running conditions of a bad road, for example, for motocross competitions. Attention is also drawn to the disclosures of JP4272244B2 and JP2009-067245A.

### CITATION LIST

### Patent Literature

PTL 1: Japanese Patent Laid-Open No. 2007-112396

### SUMMARY

### Technical Problem

The tire for running on the rough terrain may also be used for running in urban areas, or the paved road located between the rough terrains. The foregoing usage environment, especially running especially on the paved road surface, makes the land portion of such a tire disclosed in Patent Literature 1, which is suitable for running on the rough terrain subject to uneven wear.

It is an object of the invention to provide the motorcycle tire for suppressing generation of the uneven wear in the use on the paved road surface without deteriorating the steering stability on the rough terrain surface and the paved road surface.

### Solution to Problem

Having been working to cope with the foregoing problem, the inventor has obtained findings to be described below. Generally, the motorcycle tire has a semi-circular cross-section with curvature larger than that of the tire for four-wheeled vehicle. Thus, when, the center part of the tread of the motorcycle tire is grounded straight running on the paved road surface. Especially, the preferential wear is likely to occur in the land portion disposed on the center part of the tread in one circumferential side of the tire. The inventor has further found out that adaptive formation of the side wall extending in the direction intersecting the circumferential direction of the land portion allows prevention of the preferential wear to suppress generation of the uneven wear, leading to the present invention.

The motorcycle tire of the invention has a rotation direction specified, and includes one or more land portions, on a center part occupying 50% of a length of the tire on a tread surface of the tire along a periphery of the tread surface, the one or more land portions divided by a plurality of width direction grooves extending in a tire width direction and a plurality of circumferential direction grooves extending in a tire circumferential direction, the center part having an equatorial plane of the tire as a center of the center part, wherein at least one of the land portions is configured such that, in a circumferential cross-section of the tire, wherein a reference line is a section perpendicular to a shortest virtual line connecting a first boundary and a second boundary, the first boundary being between a bottom part of the plurality of width direction grooves and one side wall of the land portion at a kick-out side in the rotation direction of the tire, the second boundary being between the bottom part of the plurality of width direction grooves and other side wall of the land portion at a step-in side in the rotation direction of the tire, both the side walls facing the respective width direction grooves, the bottom parts being of the width direction grooves, the section passing through a third boundary between a surface of the land portion and the one side wall of the land portion at the kick-out side in the rotation direction of the tire, an inclination angle of the side wall at the kick-out side to the reference line is ranged from -10° to 5° inclusive, where a direction of inclination toward the land portion is defined as a negative direction, and the inclination angle of the side wall at the kick-out side is smaller than an inclination angle of the side wall at the step-in side to a line, among the perpendicular lines, which passes through the boundary between the surface of the land portion and the side wall at the step-in side.

The "pattern pitch" described herein stands for the tire circumferential direction length per unit of the tread pattern to be formed in a tire circumferential direction repeatedly. If the tire circumferential direction length per unit of the pattern changes in the tire circumferential direction, the average length may be referred to as the pattern pitch.

### Advantageous Effect

The invention provides the motorcycle tire for suppressing generation of the uneven wear in the use on the paved road surface without deteriorating the steering stability on the rough terrain surface and the paved road surface.

### BRIEF DESCRIPTION OF THE DRAWINGS

In the accompanying drawings:
FIG. 1 illustrates a part of a tread surface of a tire according to an embodiment of the invention, which is developed in a tire width direction;
FIG. 2 is a sectional view taken along line II-II of FIG. 1;
FIG. 3A illustrates a state where a center part of a land portion is grounded upon load rolling of the tire; and
FIG. 3B illustrates a state where the ground contact region is transitioned from the state illustrated in FIG. 3A.

### DETAILED DESCRIPTION

A motorcycle pneumatic tire (hereinafter simply referred to as "tire") according to the invention will be described in detail referring to the drawings with reference to an exemplary embodiment.

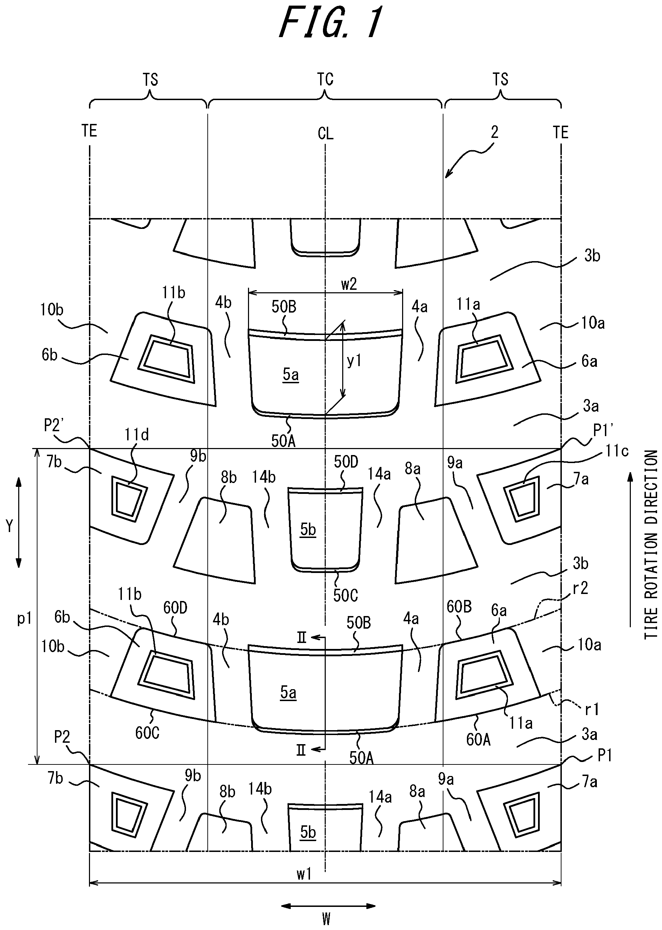

FIG. 1 illustrates a part of a tread surface 2 of a tire 1 according to an embodiment of the invention, which is developed in a tire width direction. Although not shown in the drawing, the tire 1 includes a carcass extending across a pair of beads, serving as a frame, a pair of side walls each at an outer side in a tire radial direction of the bead, and a tread extending across the side walls.

The tire 1 is structured to have its rotation direction specified to an arrowed direction as shown in the drawing. A center part TC occupies 50% of a region with a tire width direction length w1 of the tread surface 2 of the tire 1 along its periphery, having an equatorial plane of the tire as a center, in the tire 1. In the illustrated example, sections closer to tread edges TE than the center part TC are shoulder parts TS. The center part TC includes a plurality of land portions 5a and 5b, which are divided by a plurality of width direction grooves, 3a, 3b in the illustrated example, each extending in a tire width direction W, and a plurality of circumferential direction grooves, 4a, 4b, 14a and 14b in the illustrated example, each extending along the tire circumferential direction and communicating with the width direction grooves 3a, 3b.

The structure of the land portions 5a, 5b will be described, taking the land portion 5a as a typical example.

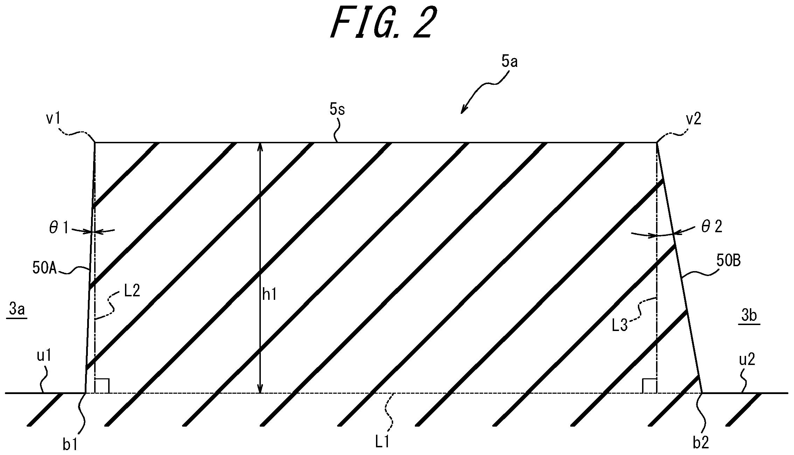

FIG. 2 is a sectional view taken along line II-II of FIG. 1, illustrating a cross-section along a tire circumferential direction Y. As FIG. 2 illustrates, assuming that the reference line is a section L2 passing through a boundary v1 between a surface 5s of the land portion 5a and a side wall 50A, among lines perpendicular to a shortest virtual line L1 connecting boundaries b1 and b2 between side walls 50A and 50B of the land portion 5a at the kick-out side and a step-in side in the rotation direction of the tire, facing the width direction grooves 3a and 3b, and bottom parts u1 and u2 of the width direction grooves 3a and 3b, respectively, an inclination angle Θ1 of the side wall 50A to the section L2 is ranged from -10° to 5° inclusive, where a direction of inclination toward the land portion 5a is defined as a negative direction.

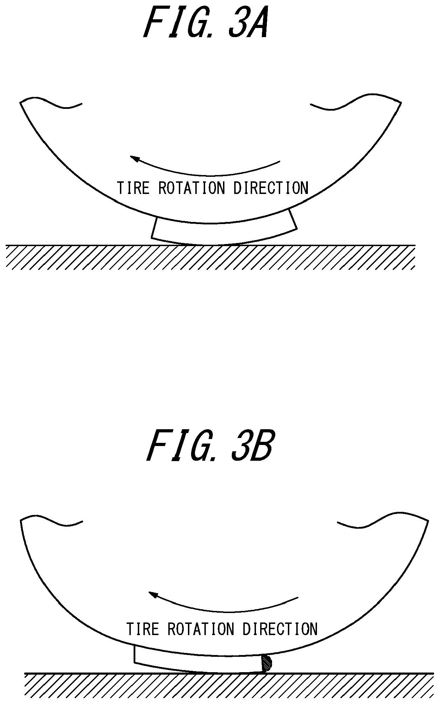

Functions derived from the above-described structure will be described below. Each of FIG. 3A and FIG. 3B illustrates a deformation behavior of the land portion upon load rolling of the tire. As FIG. 3A illustrates, the tire has a center part of the land portion grounded in contact with the road surface after step-in. The ground contact region is then transitioned to the state as illustrated in FIG. 3B. Finally, the crushing deformation as indicated with hatched lines occurs in a kick-out section of the land portion just before the land portion is separated from the road surface. The crushing deformation stands for an expansion of a tread rubber toward the tire circumferential direction or the tire width direction as the land portion is compressed in the tire radial direction. Upon the crushing deformation in the kick-out section in the tire circumferential direction, the protruding part caused by the crushing deformation is worn together with the land portion surface, resulting in uneven wear generated in the land portion. Meanwhile, by setting the inclination angle Θ1 of the side wall 50A at the kick-out side to 5° or smaller, the amount of rubber existing at the outer side of the reference line becomes small. This makes it possible to avoid the preferential wear of the expanded part owing to the crushing deformation by suppressing the expansion toward the width direction groove. By setting the inclination angle Θ1 to -10° or larger, rigidity of the land portion 5a may be sufficiently maintained. This makes it possible to exhibit the gripping performance against the road surface, and prevent a break-off or a tear-off of the land portion 5a. By setting the inclination angle Θ1 to -10° or larger, sufficient durability is imparted to the land portion. Preferably, the angle Θ1 is set to be ranged from -5° to 4° inclusive, and more preferably, from -5° to 0° inclusive. Especially, if the angle Θ1 is set to be equal to or smaller than 0°, it is possible to effectively suppress the expansion caused by the crushing deformation.

Further, it is important that the inclination angle Θ1 of the side wall 50A is smaller than an inclination angle Θ2 of the side wall 50B to the line L3, which passes through a boundary v2 between the surface 5s of the land portion 5a and the side wall 50B, among the perpendicular lines to the virtual line L1. The foregoing structure ensures to improve effects of suppressing the uneven wear of the land portion by avoiding the crushing deformation as a result of setting the inclination angle of the side wall 50A, and prevent the break-off or the tear-off generated in the land portion 5a.

Upon running on the paved road surface under the relatively high load, the amount of expansion caused by the crushing deformation tends to be increased. Therefore, it is effective to specify the range of the value of the inclination angle Θ1 of the side wall 50A, and the relation between the inclination angles θ1 and Θ2.

Preferably, the inclination angle Θ2 of the side wall 50B is ranged from 10° to 30° inclusive. By setting the inclination angle Θ2 of the side wall 50B at the step-in side in the tire rotation direction to 10° or larger, it is possible to impart sufficient rigidity to the land portion 5a. By setting the inclination angle to 30° or smaller, it is possible to exhibit drainage performance and soil removing performance.

Dimensions of the land portions 5a and 5b may be arbitrarily determined in the embodiment, taking the land portion 5a as an exemplified case below.

Preferably, a maximum length yl of the surface 5s of the land portion 5a in the tire circumferential direction Y is ranged from 10 mm to 55 mm inclusive. By setting the maximum length y1 to 10 mm or longer, it is possible to impart sufficient rigidity to the land portion 5a so that the steering stability is improved. By setting the maximum length to 55 mm or shorter, it is possible to maintain the drainage performance and the soil removing performance. Preferably, the maximum length is ranged from 11 mm to 50 mm inclusive, and more preferably, from 12 mm to 45 mm inclusive.

Preferably, a maximum length w2 of the land portion 5a along the periphery of the tread surface 2 in the width direction accounts for 10% to 40% inclusive of the width direction length w1 along the periphery of the tread surface 2. By setting the maximum length w2 to 10% or longer of the width direction length w1, it is possible to impart sufficient rigidity to the land portion 5a so that the steering stability is improved. By setting the maximum length to 40% or shorter, it is possible to maintain the drainage performance on the paved road surface.

In the illustrated example, the maximum length of the land portion 5a in the tire width direction W is different from that of the land portion 5b in the tire width direction W in light of balance between the drainage performance and rigidity. However, the maximum length of the land portion 5a may be made the same as that of the land portion 5b.

Preferably, a maximum height h1 of the land portion 5a is ranged from 6 mm to 9 mm inclusive. The maximum height h1 of the land portion 5a stands for the maximum distance from the bottom portions u1, u2 to the surface 5s. By setting the maximum height h1 to 6 mm or higher, it is possible to improve gripping force against the road surface. By setting the maximum height h1 to 9 mm or lower, it is possible to improve each rigidity of the land portions 5a and 5b. More preferably, the maximum height h1 is ranged from 7 mm to 9 mm inclusive. By setting the maximum height h1 to 9 mm or lower, it is possible to reduce absolute amount of crushing deformation of the land portion 5a.

An embodiment will be further described in detail with reference to FIG. 1 and FIG. 2.

As FIG. 1 illustrates, preferably, the side wall 50A at the kick-out side is arced while making a convex shape to the outside of the land portion 5a toward the kick-out side in the tire rotation direction, and the side wall 50B at the step-in side is arced while making the convex shape to the inside of the land portion 5a toward the kick-out side in the tire rotation direction. The foregoing structure can effectively suppress the uneven wear of the side wall 50A at the kick-out side. The side wall 50B at the step-in side is arced while making the concave shape to the tire rotation direction. On the rough terrain surface, the foregoing structure effectively catches soil and mud on the road surface to improve the gripping performance against the road surface.

In the illustrated example, the side walls 50A and 50B each with the same radius of curvature extend in the tire width direction W. However, it is possible to make the radius of curvature different between the side walls 50A and 50B so that the width of the land portion in the tire circumferential direction Y is gradually increased or decreased from the tire equatorial plane CL toward the tread edges TW.

In the illustrated example, the land portion 5b includes side walls 50C and 50D which face the width direction grooves 3b and 3a, respectively. Likewise the case of the side walls 50A and 50B, the kick-out side or/and the step-in side in the tire rotation direction of each of the side walls 50C and 50D may be arced while making the convex shape to the kick-out side or the step-in side. Likewise the case of the land portion 5a, it is preferable to form the side wall 50C at the kick-out side into the arc shape while making the convex shape to the kick-out side in the tire rotation direction.

Preferably, the number of the land portions each having the arced side walls accounts for 30% or more of the total number of the land portions disposed on the center part TC over the entire circumference of the tire 1. In the example, preferably, the number of the land portions 5a each having arced side walls 50A, 50B, and the land portions 5b each having arced side walls 50C, 50D accounts for 30% or more of the total number of the land portions disposed on the center part TC. The land portions other than the land portions 5a and 5b may be disposed on the center part TC. It is assumed that the number of only the land portions disposed in entirety on the center part TC may be counted. Especially, the ground contact pressure on the center part TC is likely to be increased. It is important to suppress the uneven wear and improve the grip performance against the road surface by disposing the fixed number or more of the land portions each having arced side walls. Preferably, the number of such land portions accounts for 40% or more, and more preferably, all the land portions 5a and 5b disposed on the center part TC have arced side walls. In the illustrated example, only the land portions 5a and 5b are disposed in entirety on the center part TC, and all the land portions have the arced side walls.

Referring to FIG. 1, the shoulder parts TS include shoulder land portions 6a and 6b, respectively divided by the width direction grooves 3a and 3b, which extend in the tire width direction W, and the circumferential direction grooves 4a, 4b, 10a and 10b, which extend in the tire circumferential direction Y. The shoulder land portions 6a and 6b are disposed adjacent to both sides of the land portion 5a, respectively. Side walls 60A and 60C of the shoulder land portions 6a and 6b, which face the width direction groove 3a, respectively, extend on the same arc of the side wall 50A, that is, an arc r1. Side walls 60B and 60D of the shoulder land portions 6a and 6b, which face the width direction groove 3b, respectively, extend on the same arc of the side wall 50B, that is, an arc r2. In the foregoing structure, the land portions on the same arc are integrally grounded on the road surface along the arc so that the gripping performance against the road surface is improved.

In the illustrated example, the shoulder parts TS include shoulder land portions 8a and 8b divided by the width direction grooves 3a and 3b, and the circumferential direction grooves 14a, 14b, 9a and 9b each extending in the tire circumferential direction Y, respectively, and shoulder land portions 7a and 7b divided by the width direction grooves 3a and 3b, the circumferential direction grooves 9a and 9b each extending in the tire circumferential direction Y, and the tread edges TE, respectively.

Each shape of the side walls of the shoulder land portions 6a, 6b, 7a, 7b, 8a and 8b, each facing the width direction groove is not specifically limited. However, likewise the case of the land portions 5a and 5b, the inclination angle may be specified.

Among the shoulder land portions, the shoulder land portions 6a, 6b, 7a and 7b may have shallow grooves 11a, 11b, 11c and 11d, respectively in the tread surface. In the example, the shallow groove stands for the groove having its groove width and groove depth relatively smaller than those of the grooves for dividing the land portion. Preferably, the shallow groove has its maximum groove width ranged from 0.1 mm to 2.0 mm inclusive, and more preferably from 0.5 mm to 1.5 mm inclusive, and its maximum groove depth ranged from 0.1 mm to 2.0 mm inclusive, and more preferably from 0.2 mm to 0.5 mm inclusive. The shallow groove formed in the surface of the shoulder land portion improves the drainage performance on the paved road surface in an initial stage of using the tire.

As illustrated, the land portion 5a, the shoulder land portions 6a and 6b are disposed linearly symmetrically with the tire equatorial plane CL as an axis in light of the steering stability. Similarly, the land portion 5b, the shoulder land portions 7a, 7b, 8a and 8b are disposed linearly symmetrically with the tire equatorial plane CL as the axis. However, it is possible to dispose those portions in differently shaped arrangement at different phase with respect to the tire equatorial plane CL.

Preferably, the number of the land portions disposed between the width direction grooves 3a and 3b across the tread edges TE is ranged from 1 to 7 inclusive, more preferably, from 2 to 6 inclusive, and further preferably, from 3 to 5 inclusive. The drawing illustrates the exemplified case having a row of three land portions interposed between the width direction grooves 3a and 3b, that is, the land portions 5a, 6a, 6b, and another row of five land portions interposed between the width direction grooves 3b and 3a, that is, the land portions 5b, 7a, 7b, 8a, 8b. By setting the lower limit number of the land portions to be disposed between a pair of width direction grooves, it is possible to improve the gripping performance against the road surface as well as riding comfort while running on the paved road surface. By setting the upper limit number of the land portions as described above, it is possible to exhibit the drainage performance and the soil removing performance on the tread surface.

Preferably, on the center part TC, the area except the areas of the surfaces of the land portions accounts for 55% to 70% inclusive of the total area on the tread surface 2 in a planar view. As the drawing illustrates, on the center part TC, the land portions 5a and 5b are disposed, and the shoulder land portions 6a, 6b, 8a and 8b partially exist. The rate of the area of the land portions which partially exist on the center part TC will be calculated using the area of the surfaces on the center part TC. As the rate of the area except the areas of the surfaces of the land portions to the total area is specified to 55% or higher, it is possible to maintain the running performance on the rough terrain surface such as the steering stability. As the rate is specified to 70% or lower, it is possible to exhibit the gripping performance against the paved road surface, and maintain the steering stability.

Preferably, 12 or more pattern pitches are provided on the tire 1 in the tire circumferential direction Y. The single pattern pitch stands for, for example, a tire circumferential direction length pl between a line formed by connecting points P1 and P2 and a line formed by connecting points P1' and P2' in the tire 1. Each of the points P1 and P2 of end edges of the land portions 7a and 7b, each facing the width direction groove 3a is the closest to the tread edge TE. Each of the points P1' and P2' of end edges of the firstly disposed land portions 7a and 7b in the tire circumferential direction Y, each facing the width direction groove 3a is the closest to the tread edge TE. Twelve or more pattern pitches as described above are provided repeatedly in the tire circumferential direction Y. The foregoing structure can exhibit the gripping performance especially against the paved road surface, and improve the steering stability. It is preferable to provide 14 or more pattern pitches.

A size of the tire 1 according to the invention will be exemplified in a non-restrictive manner. Preferably, the tire 1 has its total width ranged from 80 mm to 130 mm inclusive, an aspect ratio ranged from 70% to 100% inclusive, and a rim diameter ranged from 18 inches to 21 inches inclusive, for example.

It is preferable to mount the tire 1 on the front wheel of the motorcycle. Mounting of the tire on the front wheel of the motorcycle improves the effect of suppressing the uneven wear.

### EXAMPLE

An example according to the invention will be described in the non-restrictive manner.

Tires each having the size of 110/80B19, and the negative ratio of the center part set to 65.5% were produced experimentally as examples of the invention and comparative examples based on specifications indicated by a table 1 so as to evaluate the uneven wear resistance of the respective tires.

Each of the produced tires was assembled with the wheel, and then mounted on the front wheel of a 1200 cc motorcycle at an internal pressure of 220 kPa. The generally employed tire was employed for the rear wheel. The tire for the rear wheel has the size of 150/70B17 at the internal pressure of 250 kPa.

### (Uneven wear resistance)

Test runs of the respective motorcycles mounted with tires as comparative examples 1, 2 and an example 3 were carried out for running 400 km on the test course. A depth gauge was prepared to measure the wear amount of the end edge at the kick-out side for the uneven wear of the land portions of the center part and the shoulder parts of the tire after the test run, with reference to the end edge at the step-in side. Test runs of the respective motorcycles mounted with the tires as comparative examples 3, 4 and examples 1, 2, 4, 5 were carried out for running 400 km on the test course. The depth gauge was prepared to measure the wear amount of the end edge at the kick-out side for the uneven wear of the land portions of the center part and the shoulder parts of the tire after the test run, with reference to the end edge at the step-in side. The result is expressed as the ratio of the height at the kick-out side to the value 100 corresponding to the reference height of the land portion at the step-in side. The larger value indicates more enhanced uneven wear resistance.

### (Steering stability)

Five test drivers conducted the feeling test on the motorcycles mounted with tires of the comparative examples 1, 2 and the example 3, respectively for evaluation. Five test drivers conducted the feeling test on the motorcycles mounted with tires of the comparative examples 3, 4 and the examples 1, 2, 4, 5, respectively for evaluation. The evaluation results were rated as "excellent", "good", and "failure to meet product standard".

### (Durability)

An evaluation was made with respect to the block break-off of the motorcycles mounted with tires of the comparative examples 1, 2 and the example 3, respectively after test runs on the test course for the uneven wear resistance test as described above. An evaluation was made with respect to the block break-off of the motorcycles mounted with tires of the comparative examples 3, 4 and the examples 1, 2, 4, 5, respectively after test runs on the test course for the uneven wear resistance test as described above. If there is no break-off observed in the block, the result is rated as "excellent". If the break-off with diameter of 3 mm or smaller is observed, the result is rated as "good". If the break-off with diameter of 3 mm or larger is observed, the result is rated as "failure to meet product standard".

**(Table 1)**

| | | | Comparative example 1 | Comparative example 2 | Comparative example 3 | Example 1 | Example 2 | Example 3 | Example 4 | Example 5 | Comparative example 4 |
|---|---|---|---|---|---|---|---|---|---|---|---|
| Land portion (center part) | Side wall (kick-out side) | Inclination angle (°) | 15 | 15 | 5 | 4 | 0 | 0 | -3 | -5 | -12 |
| | Side wall (step-in side) | Inclination angle (°) | 15 | 15 | 3 | 15 | 15 | 15 | 15 | 15 | 15 |
| Land portion (shoulder part) | Side wall (kick-out side) | Inclination angle (°) | 15 | 0 | 15 | 4 | 15 | 0 | 15 | 15 | -12 |
| | Side wall (step-in side) | Inclination angle (°) | 15 | 15 | 15 | 15 | 15 | 15 | 15 | 15 | 15 |
| Uneven wear amount of center part | | | 72.2 | 72.5 | 95.4 | 966 | 98.8 | 98.7 | 99.0 | 99.0 | 99.1 |
| Uneven wear amount of shoulder part | | | 83.3 | 90.1 | 84.1 | 90.3 | 87.8 | 91.1 | 85.6 | 87.7 | 90.8 |
| Steering stability (straight running) | | | Excellent | Excellent | Failure to meet product standard | Excellent | Excellent | Excellent | Excellent | Excellent | Good |
| Durability | | | Excellent | Excellent | Good | Excellent | Excellent | Excellent | Excellent | Good | Failure to meet product standard |

### REFERENCE SIGNS LIST

- 1: tire
- 2: tread surface
- 3a,3b: width direction groove
- 4a,4b, 14a,14b: circumferential direction groove
- 5a,5b: land portion
- 5s: surface
- 6a,6b,7a,7b,8a,5b: shoulder land portion
- 9a,9b,: 10a,10b circumferential direction groove
- 11a,11b,1: 1c,11d shallow groove
- 50A,50B,50C,50D,60A,60B,60C,60D: side wall
- u1,u2: bottom
- b1,b2: boundary
- v1,v2: boundary
- L1: virtual line
- L2,L3: section
- θ1,θ2: inclination angle
- r1,r2: arc

## Claims

1. A motorcycle tire (1) having a rotation direction specified, the motorcycle tire (1) including one or more land portions (5a, 5b) on a center part (TC) of the tire (1) occupying 50% of a length of the tire (1) on a tread surface (2) of the tire (1) along a periphery of the tread surface (2), the one or more land portions (5a, 5b) divided by a plurality of width direction grooves (3a, 3b) extending in a tire width direction and a plurality of circumferential direction grooves (4a, 4b, 14a, 14b) extending in a tire circumferential direction, the center part (TC) having an equatorial plane of the tire (1) as a center of the center part (TC), wherein
at least one of the land portions (5a) is configured such that, in a circumferential cross-section of the tire (1),
wherein a reference line is a section (L2) perpendicular to a shortest virtual line (L1) connecting a first boundary (b1) and a second boundary (b2), the first boundary (b1) being between a bottom part (u1) of the plurality of width direction grooves (3a, 3b) and one side wall (50A) of the land portion (5a) at a kick-out side in the rotation direction of the tire (1), the second boundary (b2) being between the bottom part (u2) of the plurality of width direction grooves (3a, 3b) and other side wall (50B) of the land portion (5a) at a step-in side in the rotation direction of the tire (1), both the side walls (50A, 50B) facing the respective width direction grooves (3a, 3b), the bottom parts (u1, u2) being of the width direction grooves (3a, 3b), the section (L2) passing through a third boundary (v1) between a surface (5s) of the land portion (5a) and the one side wall (50A) of the land portion (5a) at the kick-out side in the rotation direction of the tire (1)
an inclination angle (θ1) of the side wall (50A) at the kick-out side to the reference line is ranged from -10° to 5° inclusive, where a direction of inclination toward the land portion (5a) is defined as a negative direction, and
the inclination angle (θ1) of the side wall (50A) at the kick-out side is smaller than an inclination angle (θ2) of the side wall (50B) at the step-in side to a section (L3), among the perpendicular lines, which passes through the boundary (v2) between the surface (5s) of the land portion (5a) and the side wall (50B) at the step-in side.

2. The motorcycle tire (1) according to claim 1, wherein a maximum length of the surface (5s) of the land portion (5a) in the tire circumferential direction is ranged from 10 mm to 55 mm inclusive.

3. The motorcycle tire (1) according to claim 1 or 2, wherein the side wall (50A) at the kick-out side is arced, making a convex shape to the outside of the land portion (5a) toward the kick-out side in the tire rotation direction, and the side wall (50B) at the step-in side is arced, making a convex shape to the inside of the land portion (5a) toward the kick-out side in the tire rotation direction.

4. The motorcycle tire (1) according to claim 3, wherein the number of the land portions (5a, 5b) having the arced side walls at the kick-out side and the step-in side accounts for 30% or more of the total number of the land portions (5a, 5b).

5. The motorcycle tire (1) according to claim 3 or 4, wherein shoulder land portions (6a, 6b) are disposed adjacent to both sides in the tire width direction of the land portion (5a) having the arced side walls at the kick-out side and the step-in side, and divided by the width direction grooves (3a, 3b) extending in the tire width direction and at least one circumferential direction groove (4a, 4b) extending in the tire circumferential direction, and at least one of the side walls (60A, 60B, 60C, 60D) of the shoulder land portion (6a, 6b), facing the width direction groove (3a, 3b), extends on the same arc (r1, r2) of the side wall (50A, 50B) of the land portion (5a) with arced side walls at the kick-out side and the step-in side.

6. The motorcycle tire (1) according to any one of claims 1 to 5, wherein an area of the center part (TC) except the areas of the surfaces (5s) of all land portions (5a, 5b, 6a, 6b, 8a, 8b) which at least partially exist on the center part (TC) accounts for 55% to 70% inclusive of a total area of the center part (TC).

7. The motorcycle tire (1) according to any one of claims 1 to 6, wherein 12 or more pattern pitches are provided in the tire circumferential direction.

## Patentansprüche

1. Motorradreifen (1), der eine spezifizierte Rotationsrichtung aufweist, wobei der Motorradreifen (1) einen oder mehrere Stegabschnitte (5a, 5b) auf einem Mittelteil (TC) des Reifens (1) einschließt, der 50 % einer Länge des Reifens (1) auf einer Lauffläche (2) des Reifens (1) entlang eines Umfangs der Lauffläche (2) einnimmt, wobei der eine oder die mehreren Stegabschnitte (5a, 5b) durch eine Vielzahl von Breitenrichtungsrillen (3a, 3b), die sich in einer Reifenbreitenrichtung erstrecken, und eine Vielzahl von Umfangsrichtungsrillen (4a, 4b, 14a, 14b), die sich in einer Reifenumfangsrichtung erstrecken, geteilt werden, wobei der Mittelteil (TC) eine Äquatorialebene des Reifens (1) als eine Mitte des Mittelteils (TC) aufweist, wobei
mindestens einer der Stegabschnitte (5a) derart konfiguriert ist, dass, in einem Umfangsquerschnitt des Reifens (1),
wobei eine Bezugslinie ein Schnitt (L2), senkrecht zu einer kürzesten virtuellen Linie (L1), ist, die eine erste Grenze (b1) und eine zweite Grenze (b2) verbindet, wobei sich die erste Grenze (b1) zwischen einem unteren Teil (u1) der Vielzahl von Breitenrichtungsrillen (3a, 3b) und einer Seitenwand (50A) des Stegabschnitts (5a) an einer Seite der letzten Ablösung in der Rotationsrichtung des Reifens (1) befindet, wobei sich die zweite Grenze (b2) zwischen dem unteren Teil (u2) der Vielzahl von Breitenrichtungsrillen (3a, 3b) und einer anderen Seitenwand (50B) des Stegabschnitts (5a) an einer Seite der ersten Berührung in der Rotationsrichtung des Reifens (1) befindet, wobei die beiden Seitenwände (50A, 50B) den jeweiligen Breitenrichtungsrillen (3a, 3b) zugewandt sind, wobei die unteren Teile (u1, u2) von den Breitenrichtungsrillen (3a, 3b) sind, wobei der Schnitt (L2) durch eine dritte Grenze (v1) zwischen einer Oberfläche (5s) des Stegabschnitts (5a) und der einen Seitenwand (50A) des Stegabschnitts (5a) an der Seite der letzten Ablösung in der Rotationsrichtung des Reifens (1) hindurchgeht,
ein Neigungswinkel (θ1) der Seitenwand (50A) an der Seite der letzten Ablösung zu der Bezugslinie von -10° bis einschließlich 5° reicht, worin eine Neigungsrichtung hin zu dem Stegabschnitt (5a) als eine negative Richtung definiert ist, und
der Neigungswinkel (θ1) der Seitenwand (50A) an der Seite der letzten Ablösung kleiner ist als ein Neigungswinkel (θ2) der Seitenwand (50B) an der Seite der ersten Berührung zu einem Schnitt (L3), unter den senkrechten Linien, der durch die Grenze (v2) zwischen der Oberfläche (5s) des Stegabschnitts (5a) und der Seitenwand (50B) an der Seite der ersten Berührung hindurchgeht.

2. Motorradreifen (1) nach Anspruch 1, wobei eine maximale Länge der Oberfläche (5s) des Stegabschnitts (5a) in der Reifenumfangsrichtung von 10 mm bis einschließlich 55 mm reicht.

3. Motorradreifen (1) nach Anspruch 1 oder 2, wobei die Seitenwand (50A) an der Seite der letzten Ablösung gewölbt ist, was eine konvexe Form zu der Außenseite des Stegabschnitts (5a) hin zu der Seite der letzten Ablösung in der Reifenrotationsrichtung herstellt, und die Seitenwand (50B) an der Seite der ersten Berührung gewölbt ist, was eine konvexe Form zu der Innenseite des Stegabschnitts (5a) hin zu der Seite der letzten Ablösung in der Reifenrotationsrichtung herstellt.

4. Motorradreifen (1) nach Anspruch 3, wobei die Anzahl der Stegabschnitte (5a, 5b), welche die gewölbten Seitenwände an der Seite der letzten Ablösung und der Seite der ersten Berührung aufweisen, 30 % oder mehr der Gesamtanzahl der Stegabschnitte (5a, 5b) ausmacht.

5. Motorradreifen (1) nach Anspruch 3 oder 4, wobei Schulterstegabschnitte (6a, 6b) angrenzend an beide Seiten in der Reifenbreitenrichtung des Stegabschnitts (5a) angeordnet sind, der die gewölbten Seitenwände an der Seite der letzten Ablösung und der Seite der ersten Berührung aufweist, und durch die Breitenrichtungsrillen (3a, 3b), die sich in der Reifenbreitenrichtung erstrecken, und mindestens eine Umfangsrichtungsrille (4a, 4b), die sich in der Reifenumfangsrichtung erstreckt, geteilt werden, und sich mindestens eine der Seitenwände (60A, 60B, 60C, 60D) des Schulterstegabschnitts (6a, 6b), die der Breitenrichtungsrille (3a, 3b) zugewandt ist, auf demselben Bogen (r1, r2) der Seitenwand (50A, 50B) des Stegabschnitts (5a) mit gewölbten Seitenwänden an der Seite der letzten Ablösung und der Seite der ersten Berührung erstreckt.

6. Motorradreifen (1) nach einem der Ansprüche 1 bis 5, wobei eine Fläche des Mittelteils (TC) mit Ausnahme der Flächen der Oberflächen (5s) aller Stegabschnitte (5a, 5b, 6a, 6b, 8a, 8b), die mindestens teilweise auf dem Mittelteil (TC) vorhanden sind, 55 % bis einschließlich 70 % einer gesamten Fläche des Mittelteils (TC) ausmacht.

7. Motorradreifen (1) nach einem der Ansprüche 1 bis 6, wobei 12 oder mehr Profilabstände in der Reifenumfangsrichtung bereitgestellt sind.

## Revendications

1. Pneu de motocyclette (1) présentant une direction de rotation spécifiée, le pneu de motocyclette (1) incluant une ou plusieurs parties d'appui (5a, 5b) sur une partie centrale (TC) du pneu (1) occupant 50 % d'une longueur du pneu (1) sur une surface de bande de roulement (2) du pneu (1) le long d'une périphérie de la surface de bande de roulement (2), lesune ou plusieurs parties d'appui (5a, 5b) étant divisées par une pluralité de rainures (3a, 3b) dans la direction de la largeur s'étendant dans une direction de la largeur de pneu et une pluralité de rainures (4a, 4b, 14a, 14b) dans la direction circonférentielle s'étendant dans une direction circonférentielle de pneu, la partie centrale (TC) présentant un plan équatorial du pneu (1) en tant que centre de la partie centrale (TC), dans lequel
au moins une des parties d'appui (5a) est configurée de telle sorte que, dans une section transversale circonférentielle du pneu (1),
dans lequel une ligne de référence est une coupe (L2) perpendiculaire à une ligne virtuelle la plus courte (L1) reliant une première limite (b1) et une deuxième limite (b2), la première limite (b1) se trouvant entre une partie inférieure (u1) de la pluralité de rainures (3a, 3b) dans la direction de la largeur et une paroi latérale (50A) de la partie d'appui (5a) au niveau d'un côté de dernier dégagement dans la direction de rotation du pneu (1), la deuxième limite (b2) se trouvant entre la partie inférieure (u2) de la pluralité de rainures (3a, 3b) dans la direction de la largeur et une autre paroi latérale (50B) de la partie d'appui (5a) au niveau d'un côté de premier contact dans la direction de rotation du pneu (1), les deux parois latérales (50A, 50B) faisant face aux rainures (3a, 3b) respectives dans la direction de la largeur, les parties inférieures (u1, u2) étant des rainures (3a, 3b) dans la direction de la largeur, la coupe (L2) passant à travers une troisième limite (v1) entre une surface (5s) de la partie d'appui (5a) et l'une paroi latérale (50A) de la partie d'appui (5a) au niveau du côté de dernier dégagement dans la direction de rotation du pneu (1),
un angle d'inclinaison (θ1) de la paroi latérale (50A) au niveau du côté de dernier dégagement par rapport à la ligne de référence s'étend de -10° à 5° inclus, où une direction d'inclinaison vers la partie d'appui (5a) est définie en tant que direction négative, et
l'angle d'inclinaison (θ1) de la paroi latérale (50A) au niveau du côté de dernier dégagement est plus petit qu'un angle d'inclinaison (θ2) de la paroi latérale (50B) au niveau du côté de premier contact par rapport à une coupe (L3), parmi les lignes perpendiculaires, qui passe à travers la limite (v2) entre la surface (5s) de la partie d'appui (5a) et la paroi latérale (50B) au niveau du côté de premier contact.

2. Pneu de motocyclette (1) selon la revendication 1, dans lequel une longueur maximale de la surface (5s) de la partie d'appui (5a) dans la direction circonférentielle de pneu s'étend de 10 mm à 55 mm inclus.

3. Pneu de motocyclette (1) selon la revendication 1 ou 2, dans lequel la paroi latérale (50A) au niveau du côté de dernier dégagement est arquée, réalisant une forme convexe à l'extérieur de la partie d'appui (5a) vers le côté de dernier dégagement dans la direction de rotation de pneu, et la paroi latérale (50B) au niveau du côté de premier contact est arquée, réalisant une forme convexe à l'intérieur de la partie d'appui (5a) vers le côté de dernier dégagement dans la direction de rotation de pneu.

4. Pneu de motocyclette (1) selon la revendication 3, dans lequel le nombre des parties d'appui (5a, 5b) présentant les parois latérales arquées au niveau du côté de dernier dégagement et du côté de premier contact représente 30 % ou plus du nombre total des parties d'appui (5a, 5b).

5. Pneu de motocyclette (1) selon la revendication 3 ou 4, dans lequel des parties d'appui d'épaulement (6a, 6b) sont disposées de manière adjacente aux deux côtés dans la direction de la largeur de pneu de la partie d'appui (5a) présentant les parois latérales arquées au niveau du côté de dernier dégagement et du côté de premier contact, et divisées par les rainures (3a, 3b) dans la direction de la largeur s'étendant dans la direction de la largeur de pneu et au moins une rainure (4a, 4b) dans la direction circonférentielle s'étendant dans la direction circonférentielle de pneu, et au moins une des parois latérales (60A, 60B, 60C, 60D) de la partie d'appui d'épaulement (6a, 6b), faisant face à la rainure (3a, 3b) dans la direction de la largeur, s'étend sur le même arc (r1, r2) de la paroi latérale (50A, 50B) de la partie d'appui (5a) avec des parois latérales arquées au niveau du côté de dernier dégagement et du côté de premier contact.

6. Pneu de motocyclette (1) selon l'une quelconque des revendications 1 à 5, dans lequel une aire de la partie centrale (TC) à l'exception des aires des surfaces (5s) de toutes les parties d'appui (5a, 5b, 6a, 6b, 8a, 8b) qui existent au moins partiellement sur la partie centrale (TC) représente 55 % à 70 % inclus d'une aire totale de la partie centrale (TC).

7. Pneu de motocyclette (1) selon l'une quelconque des revendications 1 à 6, dans lequel 12 pas de motifs ou plus sont fournies dans la direction circonférentielle de pneu.
